# EUROPÄISCHE PATENTANMELDUNG

(11) **EP 0 735 284 A2**
(43) Veröffentlichungstag der Anmeldung: **02.10.1996**
(21) Anmeldenummer: 96109882.9
(22) Anmeldetag: 11.07.1994
(51) Int. Cl.: F16B 5/06, F16B 5/12, B60R 13/02

(54) **Verbindungselement**

(30) Priorität: 06.09.1993 DE 4330102
(62) Teilanmeldung aus: 94110755.9
(71) Anmelder: TRW United-Carr GmbH & Co. KG, D-67677 Enkenbach-Alsenborn (DE)
(72) Erfinder: Kraus, Willibald, 67269 Grünstadt (DE)
(74) Vertreter: Eder, Thomas, Dr.-Ing.

(57) **Zusammenfassung**

Die Erfindung betrifft ein Verbindungselement, insbesondere zur Montage von Türverkleidungen von Kraftfahrzeugen, bestehend aus einem ersten Element (3) mit einem Ankerfuß (7) zur Montage des ersten Elementes (3) in einem ersten der zu verbindenden Teile, einem an einem zweiten der zu verbindenden Teile angeordneten zweiten Element (5) und einem das erste und zweite Element (3, 5) verbindenden dritten Element (33), wobei das erste und dritte Element (3, 33) mittels jeweils mehrerer erster und zweiter Rastrippen (13, 35) derart miteinander verbindbar sind, daß bei der Verbindung des ersten und zweiten Teils ein Ausgleich von Toleranzen in Richtung der Längsachse des Verbindungsteils (1) erfolgen kann und wobei das zweite und dritte Element (5, 33) durch eine translatorische Bewegung in einer Ebene senkrecht zur Längsachse des Verbindungselements in Eingriff bringbar sind und das erste Element (3) ein im Querschnitt rechteckförmig ausgebildetes Kopfteil (11) besitzt, an dessen äußerem Umfang die ersten Rastrippen (13) vorgesehen sind, welche mit den an der Innenseite einer sich im wesentlichen in Richtung der Längsachse des Verbindungselements (1) erstreckenden Wandung des dritten Elements (33) vorgesehenen zweiten Rastrippen (35) zusammenwirken oder wobei das erste Element (3) eine sich im wesentlichen in Richtung der Längsachse des Verbindungselements (1) erstreckende Wandung (53) besitzt, an deren Innenseite die ersten Rastrippen (13) vorgesehen sind, welche mit den am äußeren Umfang eines am dritten Element (33) vorgesehenen im Querschnitt rechteckförmig ausgebildeten Kopfteils (55) vorgesehenen zweiten Rastrippen (35) zusammenwirken.

## Beschreibung

Die Erfindung betrifft ein Verbindungselement, insbesondere zur Montage von Türverkleidungen von Kraftfahrzeugen.

Bekannte Verbindungselemente sind üblicherweise als einfacher Clip ausgebildet, der am zu befestigenden Teil angeordnet wird, wobei der Clip beispielsweise mittels einer in seinem vorderen Bereich vorgesehenen Rastnase in eine Ausnehmung oder Bohrung in einem Trägerteil eingedrückt werden kann.

Derartige Verbindungselemente haben jedoch den Nachteil, daß eine Demontage häufig mit einer Zerstörung des Clips verbunden ist, da die Rastnase wegen der bei einem Fahrzeug auftretenden Vibrationen und Stöße so ausgebildet sein muß, daß ein unbeabsichtigtes Lösen des Verbindungselements ausgeschlossen ist.

Des weiteren haben derartige Verbindungselemente den Nachteil, daß ein Ausgleich von Fertigungstoleranzen kaum oder nur in sehr engen Grenzen möglich ist. Dabei sind insbesondere Toleranzen in der Längsachse der Verbindungselemente mit bekannten Elementen nicht auszugleichen.

Der Erfindung liegt daher die Aufgabe zugrunde, ein Verbindungselement, insbesondere zur Montage von Türverkleidungen in Kraftfahrzeugen, zu schaffen, welches den mehrachsigen Ausgleich von Toleranzen ermöglicht und welches eine zerstörungsfreie Demontage der zu verbindenden Teile erlaubt.

Die Erfindung löst diese Aufgabe mit den Merkmalen des Patentanspruchs 1.

Bei dem erfindungsgemäßen dreiteiligen Verbindungselement wird ein axialer Toleranzausgleich durch die Verwendung variabel rastbarer erster und dritter Elemente sichergestellt, wobei das dritte Element als Zwischenstück zwischen dem ersten und zweiten Element ausgebildet ist.

Hierdurch ergibt sich der Vorteil, daß durch die Verwendung ein- und desselben ersten Elements unterschiedlich langer Zwischenstücke, d.h. dritter Elemente, verschieden lange Verbindungselemente hergestellt werden können.

Das Kopfteil des ersten Elements ist im Querschnitt rechteckig ausgebildet und an den Längsseiten des Kopfteils sind die ersten Rastrippen angeordnet, welche mit zweiten Rastrippen zusammenwirken, die an der Innenseite einer am dritten Teil vorgesehenen Wandung ausgebildet sind. Die Wandung ist vorzugsweise zweiteilig und gabelförmig ausgebildet, so daß ein Verschieben des ersten Elements relativ zu dem damit verbundenen dritten Element möglich ist.

Auf diese Weise wird ein Toleranzausgleich in dieser Achse sichergestellt.

In einer Weiterbildung dieser Ausführungsform weist das dritte Element einen Hals sowie ein Fußteil auf, welches in ein als taschenförmiger Retainer mit stirnseitiger Ausnehmung ausgebildetes zweites Element einschiebbar ist. Dabei ist die lichte Weite der Ausnehmung vorzugsweise größer dimensioniert als der Durchmesser des Halses. Hierdurch ergibt sich der Vorteil, daß neben einem axialen Toleranzausgleich auch ein Toleranzausgleich in einer Ebene senkrecht zur Längsachse möglich ist.

Wird die Einschubrichtung des dritten Elements in den Retainer senkrecht zur längeren Seite des rechteckförmigen Kopfteils des ersten Elements gewählt, so wird ein jeweils von der anderen Achse unabhängiger Toleranzausgleich in allen drei translatorischen Achsen gewährleistet.

In einer anderen dreiteiligen Ausführungsform der Erfindung weist das dritte Element ein Fußteil auf, welches ein als T-Profil ausgebildetes zweites Element hintergreift.

Auch hierdurch ergibt sich der Vorteil, daß ein jeweils von der anderen Achse unabhängiger Toleranzausgleich in allen drei translatorischen Achsen gewährleistet wird, vorausgesetzt, die Verschieberichtung des Fußteils auf dem T-Profil wird senkrecht zur Verschieberichtung des rechteckförmigen Kopfteils des ersten Elements in der Wandung des dritten Elements gewählt.

In einer weiteren Ausbildung der Erfindung ist der Ankerfuß schwimmend mit dem ersten Element des Verbindungsteils verbunden. Dabei kann die schwimmende Verbindung in der Weise erreicht werden, daß der Ankerfuß mittels mehrerer, zumindest in einer Ebene senkrecht zur Längsachse des Verbindungselements federnder Stege verbunden ist. Hierzu kann der Ankerfuß vorzugsweise mit mehreren, von der Innenwandung einer im ersten Element vorgesehenen Bohrung ausgehenden Stegen verbunden sein.

Hierdurch ergibt sich der Vorteil, daß ein weiterer Ausgleich von Toleranzen zumindest in einer zur Längsachse des Verbindungselements senkrechten Ebene ermöglicht wird, so daß mittels diesem Verbindungselement ein Toleranzausgleich in allen drei translatorischen Achsen gewährleistet ist.

Darüber hinaus ermöglicht der schwimmend aufgehängte Ankerfuß auch eine Kippbewegung des Ankerfußes relativ zur Achse des Verbindungselements, so daß in jedem Fall sichergestellt ist, daß der Ankerfuß auch in eine leicht schräg verlaufende Ausnehmung eingesetzt werden kann. Zudem wird hierdurch gewährleistet, daß der üblicherweise oberhalb des Ankerfußes auch zu Dichtzwecken angeordnete Teller plan auf der Oberfläche des Teils anliegt, in welches das erste Element eingesetzt wird.

Weitere Ausführungsbeispiele der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: perspektivische Ansichten a und b einer Ausführungsform eines erfindungsgemäßen Verbindungselements und
- Fig. 2: eine perspektivische Ansicht einer abgewandelten Ausführung nach Fig. 1.

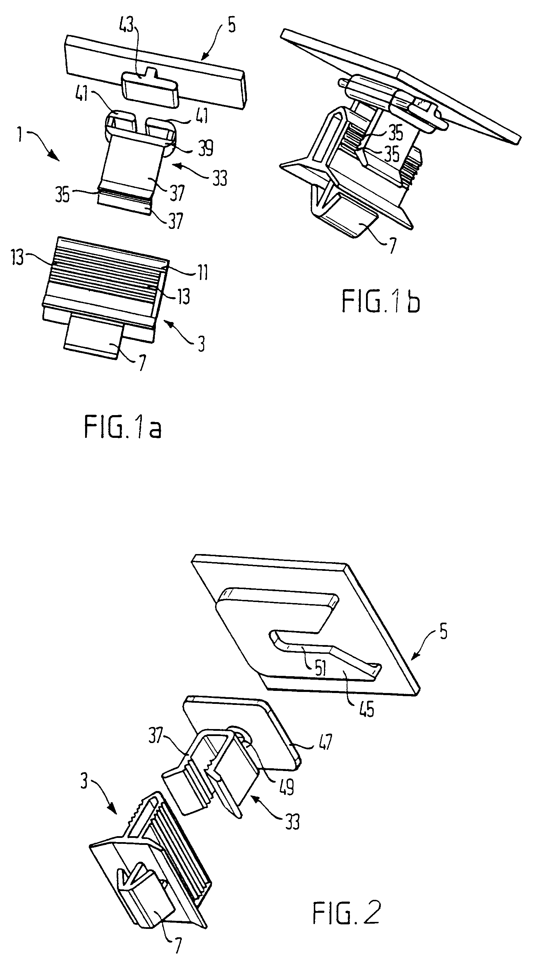

Das in Fig. 1 dargestellte Ausführungsbeispiel der Erfindung zeigt ein dreiteiliges Verbindungselement 1, welches aus einem ersten Element 3, einem zweiten Element 5 und einem als Zwischenstück ausgebildeten dritten Element 33 besteht.

Das erste Element 3 weist ein Kopfteil 11 auf, das jedoch im Querschnitt rechteckförmig ausgebildet ist. An den Längsseiten des Kopfteils 11 sind die ersten Rastnasen vorgesehen, die mit den zweiten Rastnasen 35 zusammenwirken, welche an den Innenseiten der Zweiteilig ausgebildeten Wandung 37 des dritten Elements 33 ausgebildet sind.

Das dritte Element 33 umfaßt des weiteren einen Fuß 39, der zwei U-förmige, federnde Teile 41 aufweist, die im montierten Zustand (Fig. 1b) ein am zweiten Element 5 vorgesehenes T-Profil 43 hintergreifen.

Die Montage dieses dreiteiligen Verbindungselements kann z.B. in der Weise erfolgen, daß zunächst das erste Element 3 mit seinem Ankerfuß 7, der, wie in Fig. 1 dargestellt, für entsprechende Ausnehmungen in einem ersten zu verbindenden Teil (nicht dargestellt) einen im wesentlichen rechteckförmigen Querschnitt aufweisen kann, montiert wird. Der Ankerfuß wird dabei, wie üblich, beispielsweise in eine Ausnehmung an der Innenseite einer Fahrzeugtür eingesetzt und verrastet.

Dabei kann nach diesem Vorgang oder auch vorher das dritte Element 33, beispielsweise bis zur ersten Raststufe auf das erste Element 3 aufgeschoben werden.

Anschließend kann das zweite der zu verbindenden Teile, an dem das zweite Teil 5 angeordnet ist, mit seinem T-Profil 43 in die Ausnehmung der U-förmigen Teile 41 des dritten Elements geschoben werden. Selbstverständlich kann an einer Seite des Fußes 39 ein Anschlag vorgesehen sein, der ein Durchrutschen des T-Profils 43 verhindert.

Zur endgültigen Montage kann dann wiederum die Rastung zwischen dem ersten und dritten Element 3, 33 durch einen axialen Druck soweit ineinandergeschoben werden, bis die zu verbindenden Teile im wesentlichen spielfrei und ausreichend fest verbunden sind.

Selbstverständlich sind jedoch auch andere Möglichkeiten zur Montage dieses Verbindungselements denkbar. So könnte z.B. das dritte Element 33 zunächst mit dem zweiten Element 5 verbunden und erst anschließend das erste und dritte Element in Eingriff gebracht werden.

Wird die Montagerichtung für den Fuß 39 und das T-Profil 43 senkrecht zum Verlauf der Rastnasen 13, 35 gewählt, so gewährleistet auch diese Ausführungsform der Erfindung einen Toleranzausgleich in allen drei translatorischen Achsen.

Zudem kann der Ankerfuß 7 schwimmend im ersten Element 3 aufgehängt sein. Hierzu ist ein Fortsatz des Ankerfußes 7 in einer axialen Bohrung des Kopfteils 11 beispielsweise durch drei federnde Stege gehalten, die eine Bewegung des Ankerfußes in einer Ebene senkrecht zur Achse des Verbindungselement 1 bzw. der ersten Elements 3 zulassen.

Hierdurch ergibt sich der Vorteil, daß neben einem axialen Toleranzausgleich und einem Toleranzausgleich in Einschubrichtung des ersten und zweiten Teils auch ein Toleranzausgleich in jeder Richtung einer zu Längsachse senkrechten Ebene möglich ist. D.h., das Verbindungselement 1 gewährleistet einen Toleranzausgleich in allen drei translatorischen Achsen und bei geeigneter Ausbildung der schwimmenden Aufhängung des Ankerfußes 7 auch eine Kippbewegung des Ankerfußes, so daß dieser auch in schräg zur Achse des Verbindungselements verlaufende Ausnehmungen sicher montierbar ist.

In Fig. 2 ist eine Abwandlung der Ausführungsform des Verbindungselements gemäß Fig. 1 dargestellt, die sich durch die Verbindung des dritten Elements 33 mit dem zweiten Element 5 unterscheidet.

Anstelle eines T-Profils weist das zweite Element 5, wie in Fig. 2 dargestellt, einen taschenförmigen Retainer 45 auf. In die Tasche wird ein im wesentlichen rechteckiger Fuß 47 des dritten Elements 33 eingeschoben, wobei der Hals 49 des dritten Elements 33 in eine Ausnehmung 51 in der Tasche eingreift und wobei Tasche und Fuß in ihren Abmessungen so aufeinander abgestimmt sind, daß der Fuß 47 nur in der Einschieberichtung verschiebbar ist.

Auch mit dieser Ausführungsform lassen sich die vorgenannten Vorteile erreichen.

Die Erfindung ist jedoch nicht auf die vorstehend erläuterten Ausführungsbeispiele beschränkt, sondern umfaßt selbstverständlich z.B. auch alle anderen Kombinationen der dargestellten Verbindungsmöglichkeiten zwischen den ersten, zweiten und dritten Elementen. So können z.B. statt des Ankerfußes 7 auch andere Halterungselemente, wie T-Bolzen, Sägezahnbolzen, Elemente für Formausparungen Anwendung finden.

## Patentansprüche

1. Verbindungselement, insbesondere zur Montage von Türverkleidungen von Kraftfahrzeugen, bestehend aus
einem ersten Element (3) mit einem Ankerfuß (7) zur Montage des ersten Elementes (3) in einem ersten Teil,
einem an einem mit dem ersten Teil (3) zu verbindenden zweiten Teil angeordneten zweiten Element (5) und
einem das erste und zweite Element (3, 5) verbindenden dritten Element (33),
wobei das erste und dritte Element (3, 33) mittels jeweils mehrerer erster und zweiter Rastrippen (13, 35) derart miteinander verbindbar sind, daß bei der Verbindung des ersten Teils mit dem zweiten Teil ein Ausgleich von Toleranzen in Richtung der Längsachse des Verbindungsteils (1) erfolgen kann,
**dadurch gekennzeichnet**,
daß das zweite und dritte Element (5, 33) durch eine translatorische Bewegung in einer Ebene senkrecht zur Längsachse des Verbindungselements (1) in Eingriff bringbar sind und
daß das erste Element (3) ein im Querschnitt rechteckförmig ausgebildetes Kopfteil (11) besitzt, an dessen äußerem Umfang die ersten Rastrippen (13) vorgesehen sind, welche mit den an der Innenseite einer sich im wesentlichen in Richtung der Längsachse des Verbindungselements (1) erstreckenden Wandung des dritten Elements (33) vorgesehenen zweiten Rastrippen (35) zusammenwirken oder
daß das erste Element (3) eine sich im wesentlichen in Richtung der Längsachse des Verbindungselements (1) erstreckende Wandung (53) besitzt, an deren Innenseite die ersten Rastrippen (13) vorgesehen sind, welche mit den am äußeren Umfang eines am dritten Element (33) vorgesehenen im Querschnitt rechteckförmig ausgebildeten Kopfteils (55) vorgesehenen zweiten Rastrippen (35) zusammenwirken.

2. Verbindungselement nach Anspruch 1, **dadurch gekennzeichnet**, daß die Wandung (53, 37) des ersten oder dritten Elements (3, 33) zweiteilig ausgebildet ist.

3. Verbindungselement nach Anspruch 1 oder 2, **dadurch gekennzeichnet**, daß das zweite Element als taschenförmiger Retainer (45) mit einer stirnseitigen Ausnehmung (51) ausgebildet ist und daß das dritte Element (33) einen Hals (49) und einen damit verbundenen Fuß (47, 57) aufweist, welcher in den Retainer (45) einschiebbar ist, wobei der Hals (49) in die Ausnehmung (51) des Retainers (49) des zweiten Elements (5) eingreift.

4. Verbindungselement nach Anspruch 3, **dadurch gekennzeichnet**, daß die lichte Weite der Ausnehmung (51) des Retainers (45) des zweiten Elements (5) größer ist als der Durchmesser des Halses (49).

5. Verbindungselement nach einem der Ansprüche 1 oder 2, **dadurch gekennzeichnet**, daß das zweite Element ein T-Profil (43) aufweist, auf welches ein das T-Profil (43) hintergreifender Fuß (39) des dritten Teils (33) aufschiebbar ist.

6. Verbindungselement nach einem der Ansprüche 1 bis 5, **dadurch gekennzeichnet**, daß der Ankerfuß (7) mittels einem oder mehrerer zumindest in einer Ebene senkrecht zur Längsachse des Verbindungselements (1) federnder Stege (25) mit dem ersten Element (3) verbunden ist.

7. Verbindungselement nach Anspruch 6, **dadurch gekennzeichnet**, daß das erste Element (3) eine axiale Bohrung aufweist und die Stege (25) zwischen der Innenwandung und einem Fortsatz (23) des Ankerfußes (7) angeordnet sind.
